# EUROPEAN PATENT APPLICATION

(11) **EP 2 371 633 A1**
(43) Date of publication of application: **05.10.2011**
(21) Application number: 11171998.5
(22) Date of filing: 25.09.2008
(51) Int. Cl.: B60S 1/38

(54) **Windscreen wiper device**

(62) Divisional of application: 08165114.3
(71) Applicant: Federal-Mogul S.A., 6790 Aubange (BE)
(72) Inventor: Boland, Xavier, 6700 Arlon (BE)
(74) Representative: Hooiveld, Arjen Jan Winfried

(57) **Abstract**

A windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighboring ends of said longitudinal strips are interconnected by a respective connecting piece, which windscreen wiper device comprises a connecting device for an oscillating wiper arm, with the special feature that an end wall of at least one connecting piece comprises an opening, wherein a part of said wiper blade permanently extends through said opening and beyond said connecting piece, and wherein said windscreen wiper device comprises reinforcement means for reinforcing said part of said wiper blade.

## Description

The present invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighboring ends of said longitudinal strips are interconnected by a respective connecting piece, which windscreen wiper device comprises a connecting device for an oscillating wiper arm.

Such a windscreen wiper device is known from European patent publication no. 1 491 416 of the same Applicant. The prior art windscreen wiper device is in particular designed as a "yokeless" wiper device or "flat blade", wherein use is no longer made of several yokes pivotally connected to each other, but wherein the wiper blade is biassed by the carrier element, as a result of which it exhibits a specific curvature. According to the prior art said connecting piece is slided over the neighboring ends of said strips - or vice versa, that is the neighboring ends of said strips are slided into said connecting piece - so that a reliable snap connection between these parts is realized. In the prior art said connecting piece is provided with an opening at its free end so that the wiper blade can freely slide through said connecting piece. In other words, the connecting pieces do not retain the wiper blade, so that said connecting pieces allow a relative movement of the wiper blade along the longitudinal strips in the connecting pieces.

One drawback of the prior art windscreen wiper device is the fact that the connecting pieces (in practice also called "end caps") and the wiper blade are not connected in a durable, solid manner. Particularly, when a rubber wiping element is only retained onto said strips (and not onto an upper part of the wiper blade facing away from the windscreen to be wiped), the wiping area can seriously decrease in case said wiping element is moving towards the blade bottom.

The object of the invention is to improve the prior art as indicated above, in particular to provide a windscreen wiper device, wherein the longitudinal strips and the connecting pieces ("end caps") are interconnected in a durable, solid manner, and wherein the wiping properties are improved.

In order to accomplish that objective, a windscreen wiper device of the kind referred to in the introduction according to the invention is characterized in that an end wall of at least one connecting piece comprises an opening, wherein a part of said wiper blade permanently extends through said opening and beyond said connecting piece, and wherein said windscreen wiper device comprises reinforcement means for reinforcing said part of said wiper blade. As said wiper blade over said part of its length permanently sticks out with respect to said connecting piece, a larger wiping area compared to that of the prior art is obtained, thus improving the wiping properties. However, in order to further improve said wiping properties, said part of said wiper blade permanently extending through said opening and beyond said connecting piece is reinforced, that is stiffened by said reinforcement means. Hence, said part is less "bendable". so that the wiping properties of said part are enhanced.

It is noted that the present invention is not restricted to windscreen wiper devices for cars, but that it also relates to windscreen wiper devices for rail coaches and all other (fast) vehicles.

Advantageously, a free sliding movement of said wiper blade is avoided, so that said connection piece can be firmly attached onto said wiper blade. Particularly, said wiper blade and said connecting piece comprise mutually cooperating means to block a longitudinal movement of said wiper blade in outward direction relative to said connecting piece. More in particular, the grooves of said wiper blade each comprise at least one stop for blocking said longitudinal movement of said wiper blade in outward direction relative to said connecting piece. Preferably, the stops comprise a protrusion extending laterally from a longitudinal wall of said wiper blade located between said two opposing grooves. Particularly, said connecting piece comprises at least two protrusions extending laterally inwardly, and wherein each protrusion is adjacent a corresponding stop on said wiper blade for blocking said longitudinal movement of said wiper blade in outward direction relative to said connecting piece. In other words, said protrusions on said connecting piece and said stops on said wiper blade may be spaced apart during normal use of the windscreen wiper device. However, under the influence of any longitudinal outwardly directed force on said wiper blade, said wiper blade is allowed to move in longitudinal outward direction, causing said stops on said wiper blade to correspondingly move towards said protrusions on said connecting piece, until said protrusions on said connecting piece and said stops on said wiper blade are adjacent one another.

In one preferred embodiment of a windscreen wiper device in accordance with the invention said connecting piece comprises said reinforcement means. Particularly, said reinforcement means comprises at least one longitudinal finger extending outwardly relative to said connecting piece, and wherein said finger rests inside one of said longitudinal grooves of said wiper blade. Preferably, said reinforcement means comprises two longitudinal fingers extending outwardly relative to said connecting piece, and wherein each finger rests inside a corresponding longitudinal grooves of said wiper blade. Said finger(s) particularly extend(s) through said opening of said connecting piece. In another preferred embodiment, said finger(s) is/are made in one piece with said connecting piece.

In another preferred embodiment of a windscreen wiper device according to the invention, said reinforcement means are formed by a part of at least one longitudinal strip that permanently extends through said opening and beyond said connecting piece. Preferably, said longitudinal strip and said connecting piece comprise mutually cooperating means to block a longitudinal movement of said longitudinal strip in outward direction relative to said connecting piece. In another preferred embodiment, edges of said opening of said connecting pieces are bent inwardly, and wherein said edges rest inside a recess of said longitudinal strip. Said recess is particularly formed along the exterior longitudinal side of said longitudinal strip.

Advantageously, said wiper blade and said strips comprise mutually cooperating means to block a longitudinal movement of said wiper blade in outward direction relative to said connecting piece. Particularly, the grooves of said wiper blade each comprise at least one stop for blocking said longitudinal movement of said wiper blade in outward direction relative to said connecting piece. More in particularly, the stops comprise a protrusion extending laterally from a longitudinal wall of said wiper blade located between said two opposing grooves. Each strip is preferably provided on its interior longitudinal edge with a hole within the outer contour thereof, wherein each stop is located within a corresponding hole in said strips. Preferably, said holes have a non-closed circumference.

The invention will now be explained in more detail with reference to figures illustrated in a drawing, wherein:
- figure 1 is a total perspective, schematic view of a windscreen wiper device according to the invention;
- figures 2a, 2b and 2c are schematic perspective views of a end part of a wiper blade according to a first embodiment, as used in the windscreen wiper device of figure 1; and
- figure 3 is a schematic bottom view of an end part of a wiper blade according to a second embodiment, as used in the windscreen wiper device of figure 1.

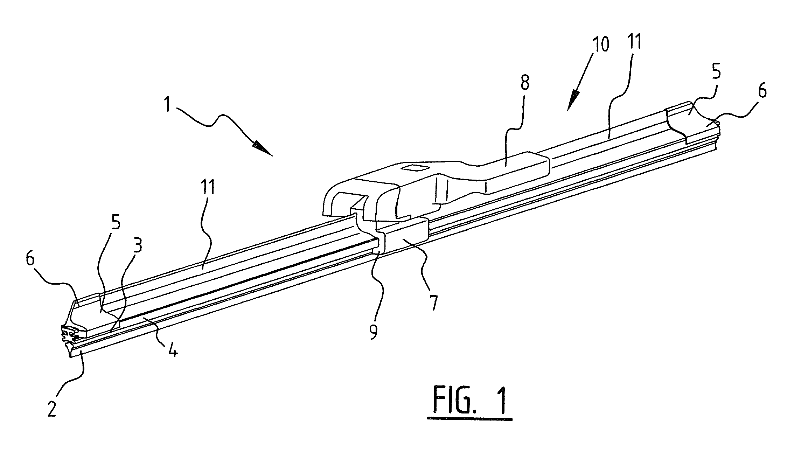

Figure 1 shows a preferred variant of a windscreen wiper device 1 of the "flat blade" type according to the invention. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighboring ends 5 of strips 4 are interconnected on either side of the windscreen wiper device 1 by means of connecting pieces 6 or "end caps" functioning as clamping members. In this embodiment, the connecting pieces 6 are separate constructional elements, which may be form-locked as well as force-locked to the ends 5 of strips 4. In another preferred variant, said connecting pieces 6 or "end caps" are in one piece with the strips 4 made of spring band steel. In the latter case said connecting pieces form transverse bridges for the strips 4, as it were. The windscreen wiper device 1 is furthermore built up of a connecting device 7 of plastic material for an oscillating wiper arm 8. Connecting device 7 comprises clamping members 9 that are integral therewith, which engage round longitudinal sides of the strips 4 that face away from each other, as a result of which the connecting device 7 is firmly attached to the unit consisting of wiper blade 2 and strips 4. The oscillating wiper arm 8 is pivotally connected to the connecting device 7 about a pivot axis near one end. The preferred embodiment of figure 1 according to the invention comprises a spoiler or "air deflector" 10 including two separate sub-spoilers 11. Each sub-spoiler 11 is detachably connected in its entirety to the wiper blade 2 on opposite sides of the connecting device 7.

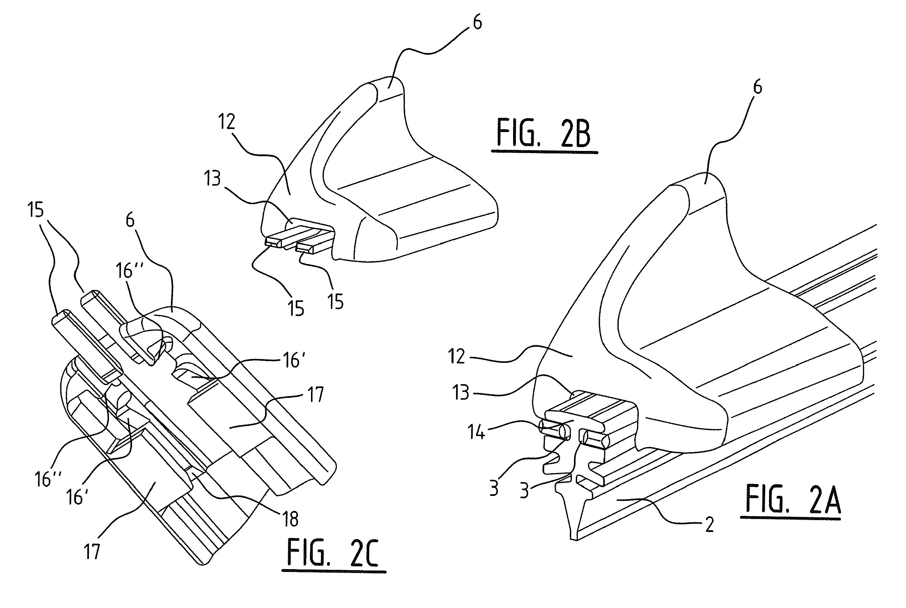

In figure 2a a perspective view of an end of the wiper blade 2 of figure 1 is shown, wherein corresponding parts have been designated with the same reference numerals. As can be seen from figure 2a, an end wall 12 of said end cap 6 comprises an opening 13, wherein a part 14 of said wiper blade 2 permanently extends through said opening 13 and beyond said end cap 6 (figures 2a through 2c). As said wiper blade 2 over said part 14 of its length permanently sticks out with respect to said end cap 6, a larger wiping area compared to that of the prior art is obtained, thus improving the wiping properties. However, in order to further improve said wiping properties, said part 14 of said wiper blade 2 that permanently extends through said opening 13 and beyond said end cap 6, is reinforced, that is stiffened by two stiffening fingers 15. Said fingers 15 are integral with the plastic end cap 6 and extend outwardly in longitudinal direction thereof. As can be seen from figure 2a, said stiffening fingers 15 are disposed in said longitudinal grooves 3 of said wiper blade 2 by sliding said end cap 6 onto said wiper blade 2. With reference to figure 2c relating to a bottom view of the end cap 6 (while the wiper blade 2 being absent), said strips 4 are each provided with a protrusion extending laterally from a longitudinal exterior edge of the strips. When said end cap 6 is slidably mounted onto the wiper blade 2 and subsequently onto the neighbouring ends 5 of the strips 4, a snap or clicking connection is realized, wherein the protrusions are snapped or clicked between stops 16',26" ("notches 16") inside the end cap 6. Each protrusion rests in a small groove between these opposing stops 16',16". Accordingly, the strips 4 are blocked against any movement in longitudinal direction with respect to the end cap 6. Said end cap 6 is also provided with two engaging members 17 made integral therewith, wherein said engaging members 17 engage around the strips 4 so as to form a groove 18 for sliding the strips 4 therein. Said engaging members 15 ensure that the strips 4 are blocked against any movement in transversal direction with respect to the end cap 6. The stop 16' facing away from the free end of the end cap 6 is equipped with an inclined upper surface, so that sliding said end cap 6 onto the strips 4 does not take too much force, whereas once the protrusion rests inside said groove dismounting the end cap from the strips 4 cannot take place easily. The stop 16" facing towards the free end of the end cap 6 also ensures that the strips are kept at a mutual constant distance, as the upper end of each strip 4 is located between said stop 16" and a (side) wall of the end cap 6.

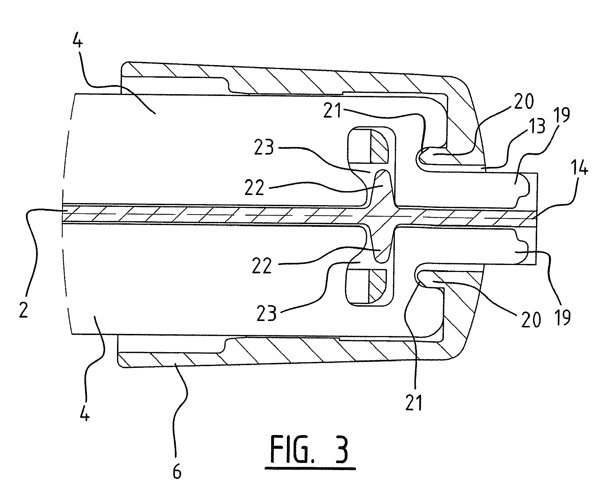

In another preferred embodiment according to figure 3, said part 14 of said wiper blade 2 that permanently extends through said opening 13 and beyond said end cap 6, is reinforced, that is stiffened by said two strips 4. In other words, also a part 19 of said strips 14 fitted into the grooves 3 of said wiper blade 2 permanently extends through said opening 13 and beyond said end cap 6. Edges 20 of said opening 13 of said end cap 6 are bent inwardly, whereas said edges 20 rest inside recesses 21 formed along the exterior longitudinal side of said strips 4.

Although not shown in figures 1, 2 and 3, but fully understood by a skilled person, said oscillating arm 8 is connected to a mounting head fixed for rotation to a shaft driven by a small motor. In use, the shaft rotates alternately in a clockwise and in a counter-clockwise sense carrying the mounting head into rotation also, which in turn draws said oscillating arm 8 into rotation and by means of said connecting device 7 moves said wiper blade 2. Said wiper blade 2 and said strips 4 comprise mutually cooperating means to block a longitudinal movement of said wiper blade in outward direction relative to said connecting piece. Particularly, the grooves 3 of said wiper blade 2 each comprise two stops in the form of opposing protrusions 22 extending laterally from a longitudinal wall of said wiper blade 2 located between said two opposing grooves 3 for blocking said longitudinal movement of said wiper blade 2 in outward direction relative to said end cap 6. Each strip 4 is provided on its interior longitudinal edge with a hole 23 within the outer contour thereof, wherein each protrusion 22 is located within a corresponding hole 23 in said strips 4. As can be seen, said holes 23 have a non-closed circumference and are preferably stamped.

The invention is not restricted to the embodiments shown, but also extends to other preferred embodiments falling within the scope of the appended claims.

### CLAUSES

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighboring ends (5) of said longitudinal strips (4) are interconnected by a respective connecting piece (6), which windscreen wiper device (1) comprises a connecting device (7) for an oscillating wiper arm (8), characterized in that an end wall (12) of at least one connecting piece (6) comprises an opening (13), wherein a part (14) of said wiper blade (2) permanently extends through said opening (13) and beyond said connecting piece (6), and wherein said windscreen wiper device (1) comprises reinforcement means for reinforcing said part (14) of said wiper blade (2).
2. A windscreen wiper device (1) according to clause 1, wherein said connecting piece (6) comprises said reinforcement means.
3. A windscreen wiper device (1) according to clause 2, wherein said reinforcement means comprises at least one longitudinal finger (15) extending outwardly relative to said connecting piece (6), and wherein said finger (15) rests inside one of said longitudinal grooves (3) of said wiper blade (2).
4. A windscreen wiper device (1) according to clause 3, wherein said reinforcement means comprises two longitudinal fingers (15) extending outwardly relative to said connecting piece (6), and wherein each finger (15) rests inside a corresponding longitudinal groove (3) of said wiper blade (2).
5. A windscreen wiper device (1) according to clause 3 or 4, wherein said finger(s) (15) extend(s) through said opening (13) of said connecting piece (6).
6. A windscreen wiper device (1) according to any of the preceding clauses 1 through 5, wherein said reinforcement means are formed by a part (19) of at least one longitudinal strip (4) that permanently extends through said opening (13) and beyond said connecting piece (6), and wherein said part (19) of said strip (4) is disposed inside one of said longitudinal grooves (3) of said wiper blade (2).
7. A windscreen wiper device (1) according to clause 6,
   wherein said reinforcement means are formed by parts (19) of said two longitudinal strips (4) that permanently extend through said opening (13) and beyond said connecting piece (6), and wherein said parts (19) of said strips (4) are disposed inside a corresponding longitudinal groove (3) of said wiper blade (2).
8. A windscreen wiper device (1) according to clause 6 or 7, wherein said longitudinal strip(s) (4) and said connecting piece (6) comprise mutually cooperating means to block a longitudinal movement of said longitudinal strip(s) (4) in outward direction relative to said connecting piece (6).
9. A windscreen wiper device (1) according to clause 8, wherein edges (20) of said opening (13) of said connecting piece (6) are bent inwardly, and wherein said edges (20) rest inside a recess (21) of said longitudinal strip(s) (4).
10. A windscreen wiper device (1) according to clause 9, wherein said recess (21) is formed along the exterior longitudinal side of said longitudinal strip(s) (4).

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighboring ends (5) of said longitudinal strips (4) are interconnected by a respective connecting piece (6), which windscreen wiper device (1) comprises a connecting device (7) for an oscillating wiper arm (8), wherein an end wall (12) of at least one connecting piece (6) comprises an opening (13), wherein a part (14) of said wiper blade (2) permanently extends through said opening (13) and beyond said connecting piece (6), and wherein said windscreen wiper device (1) comprises reinforcement means for reinforcing said part (14) of said wiper blade (2), **characterized in that** said reinforcement means are formed by a part (19) of at least one longitudinal strip (4) that permanently extends through said opening (13) and beyond said connecting piece (6), and wherein said part (19) of said strip (4) is disposed inside one of said longitudinal grooves (3) of said wiper blade (2).

2. A windscreen wiper device (1) according to claim 2,
wherein said reinforcement means are formed by parts (19) of said two longitudinal strips (4) that permanently extend through said opening (13) and beyond said connecting piece (6), and wherein said parts (19) of said strips (4) are disposed inside a corresponding longitudinal groove (3) of said wiper blade (2).

3. A windscreen wiper device (1) according to claim 1 or 2, wherein said longitudinal strip(s) (4) and said connecting piece (6) comprise mutually cooperating means to block a longitudinal movement of said longitudinal strip(s) (4) in outward direction relative to said connecting piece (6).

4. A windscreen wiper device (1) according to claim 3,
wherein edges (20) of said opening (13) of said connecting piece (6) are bent inwardly, and wherein said edges (20) rest inside a recess (21) of said longitudinal strip(s) (4).

5. A windscreen wiper device (1) according to claim 4,
wherein said recess (21) is formed along the exterior longitudinal side of said longitudinal strip(s)(4).
